# EUROPEAN PATENT APPLICATION

(11) **EP 4 596 633 A1**
(43) Date of publication of application: **06.08.2025**
(21) Application number: 23872093.2
(22) Date of filing: 21.09.2023
(51) Int. Cl.: C08L 83/07, C08K 5/05, C08K 5/54, C08L 83/05, C09K 3/00

(54) **ADDITION REACTION-CURABLE ORGANOPOLYSILOXANE COMPOSITION AND METHOD FOR PRODUCING SAME**

(30) Priority: 29.09.2022 JP 2022156447
(71) Applicant: SHIN-ETSU CHEMICAL CO., LTD., Tokyo 1000005 (JP)
(72) Inventor: IHARA, Toshiaki, Annaka-shi Gunma 379-0224 (JP); KOBAYASHI, Ataru, Annaka-shi Gunma 379-0224 (JP); SHIRAKAMI, Kento, Annaka-shi Gunma 379-0224 (JP)
(74) Representative: Mewburn Ellis LLP
(86) International application number: PCT/JP2023/034179
(87) International publication number: WO 2024/070866

(57) **Abstract**

An addition reaction-curable organopolysiloxane composition containing:
(A) (A-1) an organopolysiloxane that has a silicon atom-bonded alkenyl group in one molecule and does not have a (meth)acrylic group and
(A-2) an organopolysiloxane having an alkenyl group and a (meth)acrylic group in one molecule;
(B) an organohydrogenpolysiloxane having two or more silicon atom-bonded hydrogen atoms (Si-H groups) on average in one molecule; and
(C) 1-200 ppm of a platinum group metal-based catalyst in terms of platinum group metal mass based on the total amount of the composition,
wherein addition reaction curing can be achieved using a small amount of the platinum group metal-based catalyst, a cured film having a peeling force equivalent to those of conventional cured films can be formed, and the composition has a reduced amount of cyclic low-molecular-weight siloxane, a less cloudy appearance, and suppressed sedimentation over time.

## Description

### TECHNICAL FIELD

This invention relates to an addition reaction curable organopolysiloxane composition that can undergo an addition reaction even at a low platinum content, and a method for producing the addition reaction curable organopolysiloxane composition.

### BACKGROUND ART

In the prior art approach for preventing adhesion or bond between sheet-like substrates such as paper and plastic sheets and pressure-sensitive adhesives, a cured film of an organopolysiloxane composition is disposed on the substrate surface to impart release properties. The methods for forming a cured organopolysiloxane film on the substrate surface are known. Examples of the methods include the following methods.
(1) A method for forming a releasable film through addition reaction between an alkenyl-containing organopolysiloxane and an organohydrogenpolysiloxane in the presence of a platinum group metal-based compound as a catalyst.
(2) A method for forming a releasable film through condensation reaction of an organopolysiloxane having a functionality such as hydroxy or alkoxy in the presence of an organometallic salt as a catalyst.
(3) A method for forming a releasable film by effecting radical polymerization of an acryloyl group-containing organopolysiloxane using a photoinitiator and UV or electron beam.

Among the above methods (1), (2) and (3), method (1) for forming a releasable film through addition reaction in the presence of a platinum catalyst is widely utilized because of effective cure and because it can accommodate a variety of requisite release properties covering from low-speed release to high-speed release.

In the prior art, the amount of platinum group metal-based catalyst in the organopolysiloxane composition for release paper or release films is often 60 to 400 ppm by weight in terms of platinum group metal concentration. If the platinum concentration is less than the lower limit described above, the cure reaction does not take place to a full extent so that the cured film has low strength, and the amount of residual Si-H groups is so high that the release force becomes high. In addition, unreacted raw material organopolysiloxane exists and becomes a migrating component so that the organopolysiloxane migrates to an adhesive surface to be attached to the release paper, which may cause a drop of adhesive force.

Furthermore, platinum group metals are expensive because they are noble metals which are rare on the earth. Platinum catalysts account for a large proportion in the manufacture cost of release paper or release film. Therefore, reducing the amount of platinum group metal-based catalyst leads to a lower price. In addition, some substrates contain substances that can poison the platinum group metal-based catalysts, such as nitrogen, sulfur and phosphorus compounds. This may cause the catalyst poison to bond to the platinum group metal to inhibit the progress of cure via the addition reaction.

Thus, there is a need for a method for forming a releasable film using a small amount of platinum. For example, JP 4221300 (Patent Document 1) describes a silicone composition comprising an organopolysiloxane having at least two silicon-bonded alkenyl groups per molecule, a hydrogenated organopolysiloxane having SiH groups at an end and side chain, a MDViQ resin as an adhesion-modifying agent, and a hydrosilylation inhibitor. JP-T 2009-513740 (Patent Document 2) describes a releasable coating composition comprising an alkenyl-functionalized polysiloxane, a silicon hydride-functionalized polysiloxane, and a platinum group metal, the alkenyl-functionalized polysiloxane being prepared using a phosphazene base catalyst. The compositions described above, however, exhibit unsatisfactory cure behavior as discussed below.

For example, the composition of Patent Document 1 is characterized by the use of highly reactive terminal SiH groups and film-forming MDViQ resin. In Examples, the composition is cured in a platinum concentration of 60 ppm by heating at 150°C for 1.8 seconds. A cured film obtained in a platinum concentration of 60 ppm, however, has an extraction value (i.e., content of unreacted siloxane) which is as large as 5.8 to 6.5 wt%, indicating the presence of more uncured siloxane, that is, undercure. Release properties are described nowhere in Patent Document 4.

The composition of Patent Document 2 is characterized by the alkenyl-functionalized polysiloxane which is a branched siloxane having MDQ units. It is described that the probability of forming a crosslinked film is increased by a branched chain having a terminal vinyl group. In Example of Patent Document 2, tetradimethylvinylsiloxysilane is reacted in the presence of a phosphazene catalyst to synthesize an alkenyl-containing branched siloxane. Then a silicon hydride-functionalized polysiloxane and a platinum catalyst are blended in a concentration of 40 ppm of platinum. The composition is cured under conditions: 100°C and 15 seconds and 115°C and 20 seconds. In Patent Document 5, the cured state of the composition is evaluated by extracting the cured product with methyl isobutyl ketone. Amounts of unreacted siloxane extracted are as large as 6.4 to 25.2%, indicating undercure. Release and other properties are evaluated nowhere.

For the films having undergone a full extent of cure, it is generally recommended that the content of unreacted siloxane extracted is 5% or less, especially 3% or less. If the cured film contains 5% or more of unreacted siloxane as in Patent Documents 4 and 5, the siloxane migrates to the surface of an adhesive, leading to a substantial drop of residual adhesion rate. Since more residual SiH groups are left, the release force becomes high as compared with the fully cured state. Thus, there is a need for an organopolysiloxane composition that is curable with a minor amount of platinum catalyst.

WO 2020/145151 (Patent Document 3) has found that when an organopolysiloxane compound containing at least three (meth)acryloyl groups per molecule and having a weight average molecular weight of at least 1,000 is blended in an addition reaction type silicone composition for release paper, addition reaction can take place with a minor amount of a platinum group metal-based catalyst, and a cured film requiring a release force equivalent to that in the prior art can be formed.

Surely the composition of Patent Document 3 is fully curable even in a platinum amount which is as small as 15 ppm or 20 ppm, with a less amount of uncured silicone being left behind. Since the acryloyl-containing organopolysiloxane is incompatible with other siloxanes (e.g., alkenyl-containing organopolysiloxane and organohydrogenpolysiloxane), the composition remains white cloudy in the mixing step, and the acryloyl-containing organopolysiloxane precipitates with the lapse of time and settles down or separates out after 10 to 60 minutes of static standing. The cure with a minor amount of a platinum group metal-based catalyst is insufficient unless the lower layer is properly agitated.

The regulation of low-molecular-weight siloxanes is becoming stricter. In Japan, D4 and D6 are listed as monitored chemicals. In Europe, D4, D5, and D6 are on the candidate list of SVHC (Substances of Very High Concern), and personal care, cleaning, and detergent products containing 0.1 wt% or more of D4, D5, and D6 have been regulated from 2020. The D4, D5, and D6 contents are required to be less than 0.1 wt% each.

### PRIOR ART DOCUMENTS

### PATENT DOCUMENTS

Patent Document 1: JP 4221300
Patent Document 2: JP-T 2009-513740
Patent Document 3: WO 2020/145151

### SUMMARY OF INVENTION

### TECHNICAL PROBLEM

An object of the invention, which has been made under the above-mentioned circumstances, is to provide an addition reaction curable organopolysiloxane composition that can undergo addition reaction curing with a minor amount of a platinum group metal-based catalyst, that can form a cured film having a release force equivalent to that in the prior art, and that contains a small amount of cyclic low-molecular-weight siloxanes, such as cyclooctamethyltetrasiloxane, cyclodecamethylpentasiloxane, and dodecamethylhexasiloxane, so that the organopolysiloxane composition has less cloudy appearance and rarely undergoes separation sedimentation over time.

### SOLUTION TO PROBLEM

To achieve the above-mentioned object, the inventors of this invention have carried out intensive studies and found that, when a combination of (A-1) an organopolysiloxane having on the average at least two silicon-bonded alkenyl groups per molecule and (A-2) an organopolysiloxane having on the average 0.1 or more and 20 or less (meth)acrylic groups and on the average 0.1 or more alkenyl groups per molecule is used in a specific ratio in an addition reaction curable organopolysiloxane composition, the organopolysiloxane composition can undergo addition reaction curing with a minor amount of a platinum group metal-based catalyst, can form a cured film having a release force equivalent to that in the prior art, and it is possible to reduce the amount of cyclic low-molecular-weight siloxanes, such as cyclooctamethyltetrasiloxane, cyclodecamethylpentasiloxane, and dodecamethylhexasiloxane. The inventors of this invention have found that the specific ratio improves the compatibility of components (A-1) and (A-2) and suppresses cloudiness in appearance and separation sedimentation over time, completing the invention.

This invention thus provides the following inventions.
1. An addition reaction curable organopolysiloxane composition comprising the following components (A), (B), and (C):
   (A) components (A-1) and (A-2)
      (A-1) 50 to 99.9 parts by weight of an organopolysiloxane having on the average at least two silicon-bonded alkenyl groups per molecule and no (meth)acrylic group, and
      (A-2) 50 to 0.1 parts by weight of an organopolysiloxane having on the average 0.1 or more alkenyl groups and on the average 0.1 to 20 (meth)acrylic groups per molecule (the total amount of (A-1) and (A-2) is 100 parts by weight),
   (B) an organohydrogenpolysiloxane having on the average at least two silicon-bonded hydrogen atoms (or Si-H groups) per molecule, and
   (C) a platinum group metal-based catalyst in an amount to give 1 to 200 ppm of platinum group metal based on the total weight of the composition.
2. The addition reaction curable organopolysiloxane composition of 1, wherein the total content of cyclooctamethyltetrasiloxane, cyclodecamethylpentasiloxane, and dodecamethylhexasiloxane is 1,000 ppm (by weight) or less in component (A).
3. The addition reaction curable organopolysiloxane composition of 1 or 2, further comprising an addition reaction control agent as component (D).
4. The addition reaction curable organopolysiloxane composition of 3, wherein component (D) contains a mixture of an acetylene group-containing compound having a hydroxy group and a silane having an acetylene group.
5. The addition reaction curable organopolysiloxane composition of any one of 1 to 4, for use in release paper or release film.
6. A method for producing the addition reaction curable organopolysiloxane composition of 1 or 2, comprising a step of mixing components (A-1), (A-2), and (B) above.
7. A method for producing the addition reaction curable organopolysiloxane composition of 3 or 4, comprising a step of mixing and dispersing component (D) in components (A-1) and (A-2) or component (B) in advance.
8. The production method of 6 or 7, comprising a step of synthesizing component (A-1) by using an alkali catalyst and a step of synthesizing component (A-2) by using an acid catalyst.

### ADVANTAGEOUS EFFECTS OF INVENTION

Provided is an addition reaction curable organopolysiloxane composition that can undergo addition reaction curing with a minor amount of a platinum group metal-based catalyst, that can form a cured film having a release force equivalent to that in the prior art, and that contains a small amount of cyclic low-molecular-weight siloxanes, such as cyclooctamethyltetrasiloxane, cyclodecamethylpentasiloxane, and dodecamethylhexasiloxane, so that the organopolysiloxane composition has less cloudy appearance and rarely undergoes separation sedimentation over time.

### DESCRIPTION OF EMBODIMENTS

Now the invention is described in detail.

### [Component (A)]

Component (A) of the invention includes components (A-1) and (A-2) described below.
(A-1) an organopolysiloxane having on the average at least two silicon-bonded alkenyl groups per molecule and no (meth)acrylic group: 50 to 99.9 parts by weight
(A-2) an organopolysiloxane having on the average 0.1 or more alkenyl groups and on the average 0.1 to 20 (meth)acrylic groups per molecule: 50 to 0.1 parts by weight (the total amount of (A-1) and (A-2) is 100 parts by weight)

The organopolysiloxane (A-1) having on the average at least two silicon-bonded alkenyl groups per molecule and no (meth)acrylic group can be used alone or in combination of two or more. Examples of component (A-1) include organopolysiloxanes having a structure represented by formula (1).

MₐM^{Vi}_{b}D_{c}D^{Vi}_{d}TₑT^{Vi}_{f}Q_{g} (1)

(wherein
M is R₃SiO_{1/2},
M^{Vi} is R₂PSiO_{1/2},
D is R₂SiO_{2/2},
D^{Vi} is RPSiO_{2/2},
T is RSiO_{3/2},
T^{Vi} is PSiO_{3/2}, and
Q is SiO_{4/2}.
R is each independently a C₁-C₁₂ substituted or unsubstituted monovalent hydrocarbon group free of aliphatic unsaturation. P is an alkenyl group of the formula: -(CH₂)ₕ-CH=CH₂ wherein h is an integer of 0 to 6.
a, b, d and f are each independently 0 or a positive number, not all of b, d and f are 0 at the same time, a + b ≥ 1, and 2 ≤ b + d + f ≤ 500, c is a positive number from 10 to 2,700, e is 0 or a positive number of up to 200, and g is 0 or a positive number of up to 100.)

In formula (1), R is each independently a substituted or unsubstituted monovalent hydrocarbon group of 1 to 12 carbon atoms, preferably 1 to 10 carbon atoms, more preferably 1 to 8 carbon atoms, free of aliphatic unsaturation. Examples include alkyl groups such as methyl, ethyl, propyl, butyl, pentyl, hexyl, octyl, decyl and dodecyl, cycloalkyl groups such as cyclohexyl, aryl groups such as phenyl, naphthyl and tolyl, aralkyl groups such as benzyl and phenethyl, and substituted forms of the foregoing in which some carbon-bonded hydrogen atoms are substituted by halogen atoms, epoxy, amino, polyether, cyano or hydroxy groups. Among others, methyl preferably accounts for at least 80 mol% of the overall R from the aspects of keeping the composition curable and reducing the release force of the cured product.

P is an alkenyl group of the formula: -(CH₂)ₕ-CH=CH₂ wherein h is an integer of 0 to 6. Examples of the alkenyl group include vinyl, allyl, butenyl, propenyl, 5-hexenyl, octenyl, and decenyl, with vinyl being preferred.

In the formula (1), a, b, d and f are each independently 0 or a positive number, not all of b, d, and f are 0 at the same time, a + b ≥ 1, and 2 ≤ b + d + f ≤ 500, c is a positive number from 10 to 2,700, e is 0 or a positive number of up to 200, and g is 0 or a positive number of up to 100. The subscript "a" is preferably 0 or a positive number of up to 100, b is preferably 0 or a positive number of up to 100, d is preferably 0 or a positive number of up to 500, and f is preferably 0 or a positive number of up to 100. a + b ≥ 1, and preferably a + b ≥ 2. 2 ≤ b + d + f ≤ 500, and preferably 2 ≤ b + d + f ≤ 200. c is a positive number from 10 to 2,700, preferably 30 to 2,000, more preferably 50 to 1,500. If c is less than 10, the viscosity is so low that the composition may flow down from a roll or scatter as droplets during roll rotation, which may result in a significant decrease in the amount of the composition to be applied to the substrate. Also, e is 0 or a positive number of up to 200, preferably 0 or a positive number of up to 20, more preferably 0 or a positive number of up to 10, and g is 0 or a positive number of up to 10, preferably 0 or a positive number of up to 5.

Illustrative examples of component (A-1) include polysiloxanes containing alkenyl groups at both ends, polysiloxanes containing alkenyl groups on side chains, polysiloxanes containing alkenyl groups at one end and on side chain, polysiloxanes containing alkenyl groups at both ends and on side chains, and branched polysiloxanes containing alkenyl groups at ends. Illustrative examples include components represented by the following structural formulas: M^{Vi}₂D_{c}, M₂D_{c}D^{Vi}_{d}, M^{Vi}₃D_{c}T₁, M^{Vi}₄D_{c}T₂, M^{Vi}₅D_{c}T₃, M^{Vi}₂D_{c}D^{Vi}_{d}, M^{Vi}₂D_{c}Q₁, M^{Vi}₄D_{c}Q₁, and MₐD_{c}DVi_{d}T^{Vi}_{f} (M, M^{Vi}, D, D^{Vi}, T, T^{Vi}, Q, a, c, d, and f are as defined above. The same hereinafter). More specific structural formulas include M^{Vi}₂D₁₅₅, M^{Vi}₂D₁₀₀, M₂D₉₇D^{Vi}₃, M₂D₆₂D^{Vi}₄, M₂D₉₆D^{Vi}₄, M₂D₉₅D^{Vi}₅, M^{Vi}₃D₁₀₀T₁, M^{Vi}₄D₁₀₀T₂, M^{Vi}₂D₉₇D^{Vi}₁, M^{Vi}₂D₉₅D^{Vi}₃, M₃D₉₃D^{Vi}₃T^{Vi}₁, M^{Vi}₂D_{2,000}, and M₂D_{1,000}D^{Vi}₂₀.

Component (A-1) preferably has a vinyl value of 0.001 to 0.7 mol/100 g, more preferably 0.005 to 0.5 mol/100 g, and even more preferably 0.01 to 0.1 mol/100 g. If the vinyl value is less than 0.001 mol/100 g, less reaction sites may be available, leading to a cure failure. If the vinyl value exceeds 0.7 mol/100 g, the crosslinking density may become too high, and the low-speed release force becomes high.

Component (A-1) preferably has a weight average molecular weight (Mw) of 800 to 200,000, more preferably 1,000 to 150,000, even more preferably 1,500 to 100,000. If the Mw of component (A-1) is less than 800, it is more wettable and spreadable, but there is a risk that the coating weight on the substrate becomes insufficient. If the Mw exceeds 200,000, it is less wettable and spreadable, and there is a risk that the coating weight on the substrate widely varies. As used herein, the Mw of component (A-1) is measured by gel permeation chromatography (GPC) versus polystyrene standards using toluene solvent.

The kinematic viscosity of component (A-1) at 25°C measured with an Ostwald viscometer is preferably from 7 mm²/s to 3,000,000 mm²/s, more preferably from 10 mm²/s to 10,000 mm²/s, even more preferably from 20 mm²/s to 5,000 mm²/s. If the kinematic viscosity is less than 7 mm²/s, the overall composition has a low kinematic viscosity with a risk that the coating weight becomes insufficient.

The organopolysiloxane (A-2) having on the average 0.1 or more alkenyl groups and on the average 0.1 to 20 (meth)acrylic groups per molecule can be used alone or in combination of two or more. The alkenyl group is preferably a silicon-bonded alkenyl group, and 0.1 to 10 alkenyl groups are preferably present per molecule. The (meth)acrylic group is preferably a silicon-bonded (meth)acrylic group, and 0.1 to 15 (meth)acrylic groups are preferably present per molecule. Examples of component (A-2) include organopolysiloxanes having a structure represented by formula (2) below.

M^{α}ᵢMⱼD^{α}ₖD_{L}T^{α}ₘTₙQ_{q} (2)

(wherein
M is R₃SiO_{1/2},
D is R₂SiO_{2/2},
T is RSiO_{3/2},
Q is SiO_{4/2},
M^{α} is AcR₂SiO_{1/2}:M^{Ac} or R₂PSiO_{1/2}:M^{Vi},
D^{α} is AcRSiO_{2/2}:DM^{Ac} or RPSiO_{2/2}:D^{Vi}, and
T^{α} is AcSiO_{3/2}:T^{Ac} or PSiO_{3/2}:T^{Vi}.
R is each independently a C₁-C₁₂ substituted or unsubstituted monovalent hydrocarbon group free of aliphatic unsaturation, P is an alkenyl group of the formula: -(CH₂)ₕ-CH=CH₂ wherein h is an integer of 0 to 6, and Ac is CH₂=CR³COOR⁴ wherein R³ is a hydrogen atom, a C₁-C₂₀ alkyl group, or a C₆-C₂₀ aryl group, and R⁴ is a C₁-C₆ divalent hydrocarbon group which may have a branched or cyclic structure and may contain an epoxy group, ester group, urethane group, ether group, isocyanate group or hydroxy group.
i is a positive number from 0 to 4, j is 0 or a positive number from 0 to 7, i + j is a number from 2 to 7, k is a positive number from 0.1 to 20, L is a positive number from 3 to 300, m and n are each 0 or a positive number from 0 to 10, and q is 0 or a positive number from 0 to 4. These numbers are appropriately selected such that the organopolysiloxane has on the average 0.1 or more alkenyl groups and on the average 0.1 to 20 (meth)acrylic groups per molecule.)

i is a positive number from 0 to 4, j is 0 or a positive number from 0 to 7, and i + j is a number from 2 to 7. i is preferably 2 or 3, in which case j is preferably 0. k is a positive number from 0.1 to 20, preferably a positive number from 0.5 to 15, more preferably a positive number from 1 to 12. If k is less than 0.1, a reduction of the catalyst amount may entail low curability. k is preferably 20 or less from the viewpoint of compatibility with (A-1). L is a positive number from 3 to 300, preferably a positive number from 5 to 180, even more preferably a positive number from 10 to 160. m and n are each 0 or a positive number from 0 to 10, preferably 0 or a positive number from 0 to 6, more preferably 0 or a positive number from 0 to 3. q is 0 or a positive number from 0 to 4. If q exceeds 4, the viscosity may become too high, and the release force may become large.

Specific examples of the organopolysiloxane compound (A-2) include M^{Vi}₂D₅D^{Ac}₃, M^{Vi}₂D₂₀D^{Ac}₅, M^{Vi}₂D₂₀D^{Ac}5, M^{Vi}₂D₃₀D^{Ac}₇, M^{Vi}₂D₉₀D^{Ac}₁, M^{Vi}₂D₉₀D^{Ac}₉, M^{Vi}₂D^{Vi}₁D₂₃₀D^{Ac}₇, M^{Vi}₂D₂₅D^{Ac}₇, M^{Vi}₂D₆₅D^{Ac}₁₅, M^{Vi}₂D₂₆₅D^{Ac}₁₅, M^{Vi}₂D₆₁D^{Ac}₁₅, M^{Vi}₁M^{Ac}₁D₁₀D^{Ac}₃, M^{Vi}₂D₁₁₀D^{Ac}₇, M^{Vi}₃D₂₀D^{Ac}₅T₁, M^{Vi}₂D₁₅₀D^{Ac}₁₀, M^{Vi}₃D₁₁₀D^{Ac}₆T₁, m^{Vi}₂D₁₇₀D^{Ac}₂₂, M^{Vi}₂D₁₇₀D^{Ac}₂₀Q₁, M^{AC}₂D₂₀D^{Vi}₁, and M₂D^{Vi}₁D₃₀D^{Ac}₁.

Component (A-2) preferably has a vinyl value of 0.001 to 0.3 mol/100 g, more preferably 0.01 to 0.1 mol/100 g.

Component (A-2) preferably has a weight average molecular weight (Mw) of 3,000 to 100,000, more preferably 5,000 to 30,000.

The kinematic viscosity of component (A-2) at 25°C measured with an Ostwald viscometer is preferably from 10 to 10,000, more preferably from 50 to 3,000. If the kinematic viscosity is too low, the overall composition has a low kinematic viscosity with a risk that the coating weight becomes insufficient.

Component (A-1) is structurally stable even after vacuum concentration under high temperature for a long time, and the low-molecular-weight siloxane content can thus be reduced, and the total amount of cyclooctamethyltetrasiloxane, cyclodecamethylpentasiloxane, and dodecamethylhexasiloxane (hereinafter may be referred to as D4, D5, and D6) can be 1 to 150 ppm. In contrast, component (A-2) generates a large amount of microgels after vacuum concentration to a volatile content of 2 wt% or less. These microgels clog the pores of the filter paper to inhibit filtration. Currently, the amount of D4, D5, and D6 detected by gas chromatography is 1,000 to 30,000 ppm in total when the volatile content is controlled at 3 to 5 wt%. Therefore, the lower the amount of component (A-2), the lower the low-molecular-weight siloxane content. The mixing ratio of (A-1) and (A-2) is 50 to 99.9 parts by weight of (A-1) and 50 to 0.1 parts by weight of (A-2) (the total amount of (A-1) and (A-2) is 100 parts by weight). In other words, (A-1):(A-2) = 50:50 to 99.9:0.1. More preferably, (A-1):(A-2) = 70:30 to 99.8:0.2, and even more preferably (A-1):(A-2) = 80:20 to 99.5:0.5.

The total amount of cyclic siloxanes, such as cyclooctamethyltetrasiloxane, cyclodecamethylpentasiloxane, and dodecamethylhexasiloxane, is preferably 1,000 ppm (by weight) or less (0.1 wt% or less) in component (A), more preferably 800 ppm or less.

The amount of cyclic low-molecular-weight siloxanes is determined by gas chromatography under the following conditions: capillary column; heating conditions: 50°C to 280°C; carrier gas: helium; detector: FID; and sample injection volume: 2 µL. When the total amount of the cyclic siloxanes in component (A) is within the above range, the total content of the cyclic siloxanes in the silicone composition may be in the range of 0.1 to 850 ppm, which is very effective.

(A-1) and (A-2) are preferably mixed well. This is because if the component having an acrylic group is unevenly present, areas where curing proceeds and areas where curing does not proceed may be observed on the coated surface. For this reason, (A-1) and (A-2) are preferably stirred for 30 seconds or longer. Furthermore, component (D) described below may be mixed and dispersed during mixing of (A-1) and (A-2).

(A-1) and (A-2) can be produced by blending raw materials of the siloxane units and subjecting them to polymerization and equilibration with the aid of an acid or alkali catalyst. For example, component (A-1) is often obtained by heating and equilibrating siloxane raw materials, such as M₂, M^{Vi}₂, D₄, D₅, and D^{Vi}₄, using an alkali catalyst, such as KOH. An alkali catalyst is preferably used for synthesis of (A-1), and an acid catalyst is preferably used for synthesis of (A-2). This is because, for example, when a cured film is finally formed by adding a platinum catalyst as silicone for release paper, the residual alkali catalyst, which is a (A-1) synthesis catalyst, may serve as a catalyst poison for the platinum catalyst to inhibit curing. The alkali catalyst has a curing inhibitory effect even if the alkali catalyst remains at a ppb level. When an acid catalyst is used as a (A-2) synthesis catalyst, a small amount of residual alkali catalyst serves as a salt to suppress curing inhibition. Examples of the alkali catalyst include KOH, NaOH, potassium siliconate, cesium hydroxide, potassium methoxide, potassium t-butoxide, potassium silanolate, tetramethylammonium hydride, and tetrabutylphosphonium hydroxide. Examples of the acid catalyst includes sulfuric acid, hydrochloric acid, methanesulfonic acid, and trifluoromethanesulfonic acid.

### [Component (B)]

Component (B) is an organohydrogenpolysiloxane containing on the average at least two silicon-bonded hydrogen atoms (i.e., Si-H groups) per molecule, which may be used alone or in combination of two or more. The number of silicon-bonded hydrogen atoms (i.e., Si-H groups) per molecule is preferably 3 to 200, more preferably 10 to 200. An addition reaction takes place between Si-H groups on the organohydrogenpolysiloxane and alkenyl groups on component (A) to form a crosslinked organopolysiloxane. The content of Si-H groups is preferably 0.001 to 3.5 mol/100 g, more preferably 0.01 to 2.5 mol/100 g, even more preferably 0.02 to 2.0 mol/100 g. A less Si-H content may adversely affect curability and adhesion whereas an excessive Si-H content may cause a tightening of release force.

The organohydrogenpolysiloxane as component (B) preferably has a structure of the following formula (3).

MᵣM^{H}ₛDₜD^{H}ᵤTᵥT^{H}_{w}Qₓ (3)

(wherein
M is R₃SiO_{1/2},
M^{H} is R₂HSiO_{1/2},
D is R₂SiO_{2/2},
D^{H} is RHSiO_{2/2},
T is RSiO_{3/2},
T^{H} is HSiO_{3/2}, and
Q is SiO_{4/2}.

R is each independently a C₁-C₁₂ substituted or unsubstituted monovalent hydrocarbon group free of aliphatic unsaturation.

r, s, t, and v are each independently 0 or a positive number, u is 0 or a positive number of up to 200, w is 0 or a positive number of up to 10, x is 0 or a positive number of up to 10, not all of s, u, and w are 0 at the same time, and 2 ≤ s + u + w ≤ 200.)

In formula (3), R is as exemplified above for R in formula (1), with C₁-C₈ alkyl groups being preferred. In formula (3), r, s, t, and v are each independently 0 or a positive number, r is preferably 0 or a positive number of up to 10, s is preferably 0 or a positive number of up to 10, t is preferably 0 or a positive number of up to 100, and v is 0 or a positive number of up to 10, preferably 0 or a positive number of up to 5. Also, u is 0 or a positive number of up to 200, preferably 2 to 100, and more preferably 10 to 80, and w is 0 or a positive number of up to 10, preferably 0 or a positive number of up to 5. Not all of s, u, and w are 0 at the same time, s + u + w is 2 to 100, preferably a positive number from 10 to 80. x is 0 or a positive number of up to 10, preferably 0 or a positive number of up to 5.

Illustrative examples of the organohydrogenpolysiloxane as component (B) include polysiloxanes containing hydrogensilyl groups at both ends, polysiloxanes containing hydrogensilyl groups on side chains, polysiloxanes containing hydrogensilyl groups at one end and on side chain, and polysiloxanes containing hydrogensilyl groups at both ends and on side chains.

Examples as expressed by structural formula include M^{H}₂Dt, M₂D^{H}u, M₂DtD^{H}u, M^{H}₂DtDHu, M^{H}₃DtT₁, M^{H}₄DtT₂, and MiDtD^{H}uT^{H}w (M, MH, D, D^{H}, T, T^{H}, r, t, u, and w are as defined above. The same hereinafter). Illustrative structures include M^{H}₂D₁₀, M^{H}₂D₁₀₀, M₂D₂₇D^{H}₃, M₂D₉₇D^{H}₃, M₂D₂₆D^{H}₄, M₂D₂₅D^{H}₅, M₂D₂₄D^{H}₆, M₂D₉₆D^{H}₄, M₂D₉₅D^{H}₅, M^{H}₃D₁₀₀T₁, M^{H}₄D₁₀₀T₂, M^{H}₂D₉₇D^{H}₁, M₂D₃₀D^{H}₅Q₁, M^{H}₂D₉₅D^{H}₃, and M₃D₉₃D^{H}₃T^{H}₁.

Component (B) preferably has a weight average molecular weight (Mw) of 194 to 20,000, more preferably 874 to 5,000. If the Mw of component (B) is too low, the adhesion can be markedly aggravated. If the Mw is too high, sometimes reactivity becomes poor, and curability becomes low, resulting in a reduction of residual adhesion rate or an increase of release force due to undercure. As used herein, the Mw of component (B) is measured by gel permeation chromatography (GPC) versus polystyrene standards using toluene solvent.

The kinematic viscosity of component (B) at 25°C measured with an Ostwald viscometer is preferably from 2 to 500 mm²/s, more preferably from 2 to 300 mm²/s, even more preferably from 5 to 200 mm²/s. If the kinematic viscosity at 25°C is less than 2 mm²/s, the adhesion to substrates can be aggravated despite good reactivity due to a low molecular weight. The kinematic viscosity at 25°C is preferably 500 mm²/s or less from the viewpoint of curability and releasability.

The amount of component (B) blended is such that the moles of Si-H groups is preferably 1 to 5 times, more preferably 1.2 to 3 times the moles of alkenyl groups in component (A). The amount of 1 to 5 times corresponds to 0.016 to 3.5 mol/100 g calculated as Si-H functional groups. If component (B) is too less, curability and adhesion may become insufficient. If component (B) is too much, there is a risk that the amount of residual Si-H groups becomes more so that the release force becomes high, and the amount of Si-H groups decreases with time so that the release force lowers with time.

### [Component (C)]

As the platinum group metal-based catalyst (C) of the invention, any well-known addition reaction catalysts may be used. Such platinum group metal-based catalysts include, for example, platinum, palladium, rhodium and ruthenium-based catalysts, with the platinum-based catalysts being preferred. Examples of the platinum-based catalyst include platinum base compounds, complexes of platinum with vinyl siloxanes, alcohol or aldehyde solutions of chloroplatinic acid, complexes of chloroplatinic acid with olefins, and complexes of chloroplatinic acid with vinyl siloxanes.

The amount of component (C) blended is 1 to 200 ppm, preferably 1 to 100 ppm, more preferably 2 to 70 ppm, even more preferably 3 to 50 ppm, particularly preferably 7 to 25 ppm in terms of the weight of the platinum group metal based on the total weight of the composition. In this invention, the amount of component (C) blended may be low because curing can proceed with a low catalyst amount.

### [Component (D)]

Component (D) of the invention is an addition reaction control agent, which is optional and serves to control the catalytic activity of the platinum group metal-based catalyst. Included are organonitrogen compounds, organophosphorus compounds, acetylene compounds, oxime compounds, and organic chlorine compounds. Component (D) is preferably a mixture of an acetylene group-containing compound having a hydroxy group and a silane having an acetylene group. The reason why this mixture is preferred may be as follows. The acetylene group-containing compound having a hydroxy group is originally effective in controlling the addition reaction, but it cannot fully demonstrate its ability because it is insoluble in a siloxane compound. The acetylene group-containing compound having a hydroxy group when used in combination with an acetylene group-containing silane compatible with a siloxane compound shows better compatibility and thus fully demonstrates the original control effect. During heating, the acetylene group-containing compound having a hydroxy group boils together with the acetylene group-containing silane having a low boiling point, so that the control agent is removed from the composition at a lower temperature than originally expected.

Examples of the acetylene group-containing compound having a hydroxy group include 1-ethynyl-1-cyclohexanol, 3-methyl-1-butyn-3-ol, 3,5-dimethyl-1-hexyn-3-ol, 3-methyl-1-pentyn-3-ol, and 2-phenyl-3-butyn-2-ol.

Examples of the acetylene group-containing silane include reaction products of alkoxysilanes with acetylene compounds, such as 1,1-dimethylpropynyloxytrimethylsilane and bis(1,1-dimethyl-2-propynyloxy)dimethylsilane.

When used, the amount of component (D) blended is preferably 0.01 to 5 parts by weight, more preferably 0.1 to 3 parts by weight per 100 parts by weight of component (A).

### [Optional components]

Any components which are commonly blended in conventional release paper or film-forming organopolysiloxane compositions may be blended in the organopolysiloxane composition of the invention as long as the benefits of the invention are not impaired. The organopolysiloxane composition even when diluted with an organic solvent during use does not undergo degradation of its properties. In this invention, the organopolysiloxane composition is preferably a solvent-free organopolysiloxane composition. The amount of components other than components (A) to (D) above is appropriately selected as long as the benefits of the invention are not impaired. For example, the amount of components may be appropriately selected from 0.001 to 990 parts by weight, preferably from 1 to 100 parts by weight per 100 parts by weight of component (A).

Examples of the organic solvent include organic solvents (other than siloxane solvents) soluble in organopolysiloxane, such as toluene, hexane, xylene, and methyl ethyl ketone (also known as 2-butanone); low-viscosity cyclic siloxanes, such as octamethyltetrasiloxane and decamethylpentasiloxane, and organopolysiloxane (siloxane solvents).

Optional additives include, for example, for imparting lubricity, high-molecular-weight linear organopolysiloxanes other than components (A) and (B); and for adjusting release force, aryl group-containing silicone resins silicone resins, silica, low molecular weight organopolysiloxanes free of silicon-bonded hydrogen and alkenyl group, other than components (A) and (B).

### [Preparation method and optional components]

The organopolysiloxane composition of the invention can be obtained by, for example, mixing components (A-1), (A-2), (B), and (C) described above. This method includes a step of mixing components (A-1), (A-2), and (B) and may further include mixing component (D) with components (A-1), (A-2), and (B). Components (A-1) and (A-2) may be mixed in advance. When component (D) is blended, the method preferably includes a step of mixing and dispersing component (D) in components (A-1) and (A-2) or component (B) in advance. Specifically, component (D) incompatible with organopolysiloxane is mixed and dispersed in components (A-1) and (A-2) or component (B) in advance to form a uniform dispersion, and the remaining components are then mixed to uniformly disperse the addition reaction control agent.

### [Addition reaction curable organopolysiloxane composition]

The organopolysiloxane composition of the invention is an addition reaction curable composition. From the viewpoint of the above properties, the organopolysiloxane composition of the invention is suitably used for release paper or release films. The addition reaction curable organopolysiloxane composition of the invention preferably has a kinematic viscosity at 25°C of up to 500 mm²/s, more preferably 10 to 450 mm²/s, even more preferably 50 to 430 mm²/s, as measured with an Ostwald viscometer. Too low a kinematic viscosity may lead to a smaller coating weight whereas too high a kinematic viscosity may invite a variation in coating weight and emission of a large volume of mist.

The release force of the organopolysiloxane composition of the invention is preferably 0.01 to 1 N/25 mm, more preferably 0.03 to 0.5 N/25 mm both under a load of 70 gf/cm² at 25°C and under a load of 20 gf/cm² at 70°C, when evaluated using a TESA-7475 tape in accordance with the FINAT method described in Examples.

### [Application and usage]

The organopolysiloxane composition of the invention is coated onto a sheet-like substrate such as paper or plastic film by means of a coating roll and heat cured in a standard way. The sheet-like substrate having a cured silicone film of the organopolysiloxane composition of the invention disposed on one surface is advantageously used as a release sheet for release paper or film. Exemplary paper substrates include glassine paper, polyethylene-laminated paper, polyvinyl alcohol resin-coated paper and clay-coated paper. Exemplary plastic film substrates include films of polyethylene, polypropylene, and polyesters such as polyethylene terephthalate.

### [For release paper or release film]

A release paper or release film having the cured product of the organopolysiloxane composition of the invention is obtained. For example, the coating weight of the organopolysiloxane composition may be sufficient to form a cured silicone film on the surface of a sheet-like substrate, for example, about 0.1 to 5.0 g/m². An excessive coating weight may rather invite a drop of release performance. Although the heat curing temperature varies with the type of substrate and the coating weight, a cured film can be formed on a substrate by heating at 60 to 200°C, preferably 100 to 190°C, more preferably 120 to 180°C for 1 to 60 seconds, preferably 2 to 40 seconds.

### EXAMPLES

Examples and Comparative Examples are given below for further illustrating the invention although the invention is not limited thereto. It is noted that the weight average molecular weight described below is determined by ²⁹Si-NMR, the viscosity is determined at 25°C by using a rotational viscometer, and the kinematic viscosity is determined at 25°C by using an Ostwald viscometer.

### [Raw materials used]

### (A)

### Component (A-1)

(A-1-1) Siloxane containing vinyl groups at both ends: M^{Vi}₂D₁₅₅
M^{Vi}: (CH₂=CH)(CH₃)₂SiO_{1/2}
D: (CH₃)₂SiO_{2/2}

### <Synthesis method>

KOH (300 ppm) was added to 0.1 moles of 1,3-divinyltetramethyldisiloxane (M^{Vi}₂) and 3.875 moles of octamethylcyclotetrasiloxane (D₄), followed by polymerization and equilibration at 150°C for 6 hours. Ethylene chlorohydrin was then added in a molar amount which was 1.5 times the moles of KOH, followed by neutralization at 150°C for 3 hours. The reaction solution was vacuum concentrated under conditions: 120°C, 20 mmHg for 3 hours, combined with 5 wt% of activated carbon Shirasagi A (Osaka Gas Chemicals Co., Ltd.), stirred for 2 hours, and filtered through a filter plate NA10 (Advantec Co., Ltd.). The obtained siloxane was an organopolysiloxane having a molecular chain represented by structural formula M^{Vi}₂D₁₅₅ determined by ²⁹Si-NMR, wherein the molecular chain were capped at both ends with dimethylvinylsiloxy groups and consisting entirely of (CH₃)₂SiO units except at the both ends, and the organopolysiloxane had a vinyl value of 0.017 mol/100 g and a kinematic viscosity of 440 mm²/s.

(A-1-2) Siloxane containing vinyl groups at both ends: M^{Vi}₂D₁₀₀
M^{Vi}: (CH₂=CH)(CH₃)₂SiO_{1/2}
D: (CH₃)₂SiO_{2/2}

### <Synthesis method>

KOH (300 ppm) was added to 0.1 moles of 1,3-divinyltetramethyldisiloxane (M^{Vi}₂) and 2.5 moles of octamethylcyclotetrasiloxane (D₄), followed by polymerization and equilibration at 150°C for 6 hours. Ethylene chlorohydrin was then added in a molar amount which was 1.5 times the moles of KOH, followed by neutralization at 150°C for 3 hours. The reaction solution was vacuum concentrated under conditions: 120°C, 20 mmHg for 3 hours, combined with 5 wt% of activated carbon Shirasagi A (Osaka Gas Chemicals Co., Ltd.), stirred for 2 hours, and filtered through a filter plate NA10 (Advantec Co., Ltd.). The obtained siloxane was an organopolysiloxane having a molecular chain represented by structural formula M^{Vi}₂D₁₀₀ determined by ⁹Si-NMR, wherein the molecular chain were capped at both ends with dimethylvinylsiloxy groups and consisting entirely of (CH₃)₂SiO units except at the both ends, and the organopolysiloxane had a vinyl value of 0.026 mol/100 g and a kinematic viscosity of 200 mm²/s.

### Component (A-2)

(A-2-1) Siloxane containing acrylic groups on side chains and vinyl groups at both ends: M^{Vi}₂D₉₀D^{Ac}₁
D: (CH₃)₂SiO_{2/2},
D^{Ac}: (CH₂=CHCOOCH₂CH₂CH₂)(CH₃)SiO_{2/2}

### <Synthesis method>

To 0.1 moles of 1,3-divinyltetramethyldisiloxane (M^{Vi}₂), 2.25 moles of octamethylcyclotetrasiloxane (D₄), and 0.025 moles of tetramethyl tetraacryloxycyclotetrasiloxane (D^{Ac}₄), sulfuric acid was added in an amount of 10 wt% relative to the total siloxane amount, followed by polymerization and equilibration at room temperature for 4 hours. Water and toluene were added in amounts of 2 wt% and 82.5 wt% relative to the total siloxane amount, respectively, and the mixture was stirred for 2 hours and then allowed to stand. The organic layer was separated from the aqueous layer, and the aqueous layer was collected and discarded. A 10 wt% aqueous solution of glauber's salt was added to the organic layer in an amount of about 80 wt%, and the mixture was stirred for 30 minutes and then allowed to stand. The separated aqueous layer was then discarded. After dehydration by addition of about 3 wt% of glauber's salt relative to the total siloxane weight, the organic layer was filtered through a filter plate. The obtained siloxane was subjected to vacuum stripping at 120°C and 10 mmHg to obtain organopolysiloxane having a viscosity of 205 mm²/s and a volatile content of 3.2 wt%. The vinyl value calculated from ¹H-NMR was 0.028 mol/100 g.

(A-2-2) Siloxane containing acrylic groups on side chains and vinyl groups at both ends: M^{Vi}₂D₉₀D^{Ac}₉

To 0.1 moles of 1,3-divinyltetramethyldisiloxane (M^{Vi}₂), 2.25 moles of octamethylcyclotetrasiloxane (D₄), and 0.225 moles of tetramethyl tetraacryloxycyclotetrasiloxane (D^{Ac}₄), sulfuric acid was added in an amount of 10 wt% relative to the total siloxane amount, followed by polymerization and equilibration at room temperature for 4 hours. Water and toluene were added in amounts of 2 wt% and 82.5 wt% relative to the total siloxane amount, respectively, and the mixture was stirred for 2 hours and then allowed to stand. The organic layer was separated from the aqueous layer, and the aqueous layer was collected and discarded. A 10 wt% aqueous solution of glauber's salt was added to the organic layer in an amount of about 80 wt%, and the mixture was stirred for 30 minutes and then allowed to stand. The separated aqueous layer was then discarded. After dehydration by addition of about 3 wt% of glauber's salt relative to the total siloxane weight, the organic layer was filtered through a filter plate. The obtained siloxane was subjected to vacuum stripping at 120°C and 10 mmHg to obtain organopolysiloxane having a viscosity of 231 mm²/s and a volatile content of 3.3 wt%. The vinyl value calculated from ¹H-NMR was 0.024 mol/100 g.

(A-2-3) Siloxane containing acrylic groups on side chains and vinyl groups at both ends: M^{Vi}₂D₁₅₀D^{Ac}_{0.1}

To 0.1 moles of 1,3-divinyltetramethyldisiloxane (M^{Vi}₂), 2.25 moles of octamethylcyclotetrasiloxane (D₄), and 0.225 moles of tetramethyl tetraacryloxycyclotetrasiloxane (D^{Ac}₄), trifluoromethanesulfonic acid and 2,6-di-tert-butyl-4-methylphenol (Ionol: Oxalis Chemicals) were added in amounts of 0.7 wt% and 0.05 wt% relative to the total siloxane amount, respectively, followed by polymerization and equilibration at 60°C for 8 hours. After equilibration, KYOWAAD 500SH (neutralizer; hydrotalcite: Kyowa Chemical Industry Co., Ltd.) was added in an amount twice that of the catalyst, and the mixture was stirred for 2 hours for neutralization. After neutralization, solids such as KYOWAAD 500SH and siloxane were separated by filtration using a filter plate. The obtained siloxane was subjected to vacuum stripping at 120°C and 10 mmHg to obtain organopolysiloxane having a viscosity of 415 mm²/s and a volatile content of 3.1 wt%. The vinyl value calculated from ¹H-NMR was 0.0177 mol/100 g.

### Component (B)

### (B-1) Methylhydrogenpolysiloxane

Methylhydrogenpolysiloxane capped at both ends of the molecular chain with trimethylsiloxy groups, consisting of (CH₃)HSiO units except at the both ends, and having a Si-H content of 1.54 mol/100 g and a kinematic viscosity of 32 mm²/s

### Component (C)

### (C-1) Platinum group metal-based catalyst: platinum/vinylsiloxane complex

### Component (D)

(D-1) 1-Ethynyl-1-cyclohexanol
(D-2) Bis(1,1-dimethyl-2-propynyloxy)dimethylsilane

### [Example 1]

To a mixture prepared by adding 50 parts by weight of methyl vinyl polysiloxane (A-1-1) used as component (A-1), 50 parts by weight of siloxane (A-2-1) containing acrylic groups on its side chains and vinyl groups at both ends used as component (A-2), and 1 part by weight of 1-ethynylcyclohexanol (D-1) and 0.5 parts by weight of bis(1,1-dimethyl-2-propynyloxy)dimethylsilane (D-2) used as components (D) and stirring them for 10 minutes until uniform, 2.34 parts by weight of methylhydrogenpolysiloxane (B-1) used as component (B) was added and mixed for 10 minutes. Subsequently, 0.52 parts by weight of a platinum-vinylsiloxane complex (C-1) used as component (C) was added in such an amount as to give 13 ppm by weight of platinum atom based on the total weight of components (A), (B), and (D), and the mixture was stirred for 1 minute until uniform to prepare a composition having a H/Vi (i.e., ratio of Si-H groups in the composition to alkenyl groups in the composition) of 1.6. The amount of cyclic low-molecular-weight siloxanes (D4 + D5 + D6) contained in (A) was 700 ppm.

### [Example 2]

A composition having a H/Vi of 1.6 was prepared by the same method as in Example 1 except that 95 parts by weight of methyl vinyl polysiloxane (A-1-1) was used as component (A-1), 5 parts by weight of siloxane (A-2-2) containing acrylic groups on its side chains and vinyl groups at both ends was used as component (A-2), and 1.80 parts by weight of methylhydrogenpolysiloxane (B-1) was used as component (B). The amount of the cyclic low-molecular-weight siloxanes contained in (A) was 740 ppm.

### [Example 3]

A composition having a H/Vi of 1.6 was prepared by the same method as in Example 1 except that 50 parts by weight of methyl vinyl polysiloxane (A-1-2) was used as component (A-1), 50 parts by weight of siloxane (A-2-1) containing acrylic groups on its side chains and vinyl groups at both ends was used as component (A-2), and 2.81 parts by weight of methylhydrogenpolysiloxane (B-1) was used as component (B). The amount of the cyclic low-molecular-weight siloxanes contained in (A) was 710 ppm.

### [Example 4]

A composition having a H/Vi of 1.6 was prepared by the same method as in Example 1 except that 99.5 parts by weight of methyl vinyl polysiloxane (A-1-2) was used as component (A-1), 0.5 parts by weight of siloxane (A-2-2) containing acrylic groups on its side chains and vinyl groups at both ends was used as component (A-2), and 2.70 parts by weight of methylhydrogenpolysiloxane (B-1) was used as component (B). The amount of the cyclic low-molecular-weight siloxanes contained in (A) was 40 ppm.

### [Comparative Example 1]

After 100 parts by weight of methylvinylpolysiloxane (A-1-1) used as component (A-1), 1.77 parts by weight of methylhydrogenpolysiloxane (B-1) used as component (B), and 1 part by weight of 1-ethynylcyclohexanol (D-1) and 0.5 parts by weight of bis(1,1-dimethyl-2-propynyloxy)dimethylsilane (D-2) used as components (D) were added and stirred for 10 minutes, 0.52 parts by weight of a platinum-vinylsiloxane complex was added as component (C) in such an amount as to give 13 ppm by weight of platinum atom based on the total weight of components (A), (B), and (D) and stirred for 1 minute to prepare a composition having a H/Vi (i.e., ratio of Si-H groups in the composition to alkenyl groups in the composition) of 1.6. The amount of the cyclic low-molecular-weight siloxanes contained in (A) was 20 ppm.

### [Comparative Example 2]

After 100 parts by weight of methylvinylpolysiloxane (A-1-2) used as component (A-1), 2.70 parts by weight of methylhydrogenpolysiloxane (B-1) used as component (B), and 1 part by weight of 1-ethynylcyclohexanol (D-1) and 0.5 parts by weight of bis(1,1-dimethyl-2-propynyloxy)dimethylsilane (D-2) used as components (D) were added and stirred for 10 minutes, 0.52 parts by weight of a platinum-vinylsiloxane complex was added as component (C) in such an amount as to give 13 ppm by weight of platinum atom based on the total weight of components (A), (B), and (D) and stirred for 1 minute to prepare a composition having a H/Vi (i.e., ratio of Si-H groups in the composition to alkenyl groups in the composition) of 1.6. The amount of the cyclic low-molecular-weight siloxanes contained in (A) was 30 ppm.

### [Comparative Example 3]

After 100 parts by weight of siloxane (A-2-1) containing acrylic groups on its side chains and vinyl groups at both ends used as component (A-2), 2.9 parts by weight of methylhydrogenpolysiloxane (B-1) used as component (B), and 1 part by weight of 1-ethynylcyclohexanol (D-1) and 0.5 parts by weight of bis(1,1-dimethyl-2-propynyloxy)dimethylsilane (D-2) used as components (D) were added and stirred for 10 minutes, 0.52 parts by weight of a platinum-vinylsiloxane complex was added as component (C) in such an amount as to give 13 ppm by weight of platinum atom based on the total weight of components (A), (B), and (D) and stirred for 1 minute to prepare a composition having a H/Vi (i.e., ratio of Si-H groups in the composition to alkenyl groups in the composition) of 1.6. The amount of the cyclic low-molecular-weight siloxanes contained in (A) was 1,390 ppm.

### [Comparative Example 4]

After 100 parts by weight of siloxane (A-2-2) containing acrylic groups on its side chains and vinyl groups at both ends used as component (A-2), 2.49 parts by weight of methylhydrogenpolysiloxane (B-1) used as component (B), and 1 part by weight of 1-ethynylcyclohexanol (D-1) and 0.5 parts by weight of bis(1,1-dimethyl-2-propynyloxy)dimethylsilane (D-2) used as components (D) were added and stirred for 10 minutes, 0.52 parts by weight of a platinum-vinylsiloxane complex was added as component (C) in such an amount as to give 13 ppm by weight of platinum atom based on the total weight of components (A), (B), and (D) and stirred for 1 minute to prepare a composition having a H/Vi (i.e., ratio of Si-H groups in the composition to alkenyl groups in the composition) of 1.6. The amount of the cyclic low-molecular-weight siloxanes contained in (A) was 14,510 ppm.

### [Comparative Example 5]

After 100 parts by weight of siloxane (A-2-3) containing acrylic groups on its side chains and vinyl groups at both ends used as component (A-2), 1.84 parts by weight of methylhydrogenpolysiloxane (B-1) used as component (B), and 1 part by weight of 1-ethynylcyclohexanol (D-1) and 0.5 parts by weight of bis(1,1-dimethyl-2-propynyloxy)dimethylsilane (D-2) used as components (D) were added and stirred for 10 minutes, 0.52 parts by weight of a platinum-vinylsiloxane complex was added as component (C) in such an amount as to give 13 ppm by weight of platinum atom based on the total weight of components (A), (B), and (D) and stirred for 1 minute to prepare a composition having a H/Vi (i.e., ratio of Si-H groups in the composition to alkenyl groups in the composition) of 1.6. The amount of the cyclic low-molecular-weight siloxanes contained in (A) was 12,480 ppm.

### [Comparative Example 6]

After 20 parts by weight of methyl vinyl polysiloxane (A-1-1) used as component (A-1), 80 parts by weight of siloxane (A-2-1) containing acrylic groups on its side chains and vinyl groups at both ends used as component (A-2), 2.68 parts by weight of methylhydrogenpolysiloxane (B-1) used as component (B), and 1 part by weight of 1-ethynylcyclohexanol (D-1) and 0.5 parts by weight of bis(1,1-dimethyl-2-propynyloxy)dimethylsilane (D-2) used as components (D) were added and stirred for 10 minutes, 0.52 parts by weight of a platinum-vinylsiloxane complex was added as component (C) in such an amount as to give 13 ppm by weight of platinum atom based on the total weight of components (A), (B), and (D) and stirred for 1 minute to prepare a composition having a H/Vi (i.e., ratio of Si-H groups in the composition to alkenyl groups in the composition) of 1.6. The amount of the cyclic low-molecular-weight siloxanes contained in (A) was 1,120 ppm.

### [Comparative Example 7]

After 40 parts by weight of methyl vinyl polysiloxane (A-1-2) used as component (A-1), 60 parts by weight of siloxane (A-2-2) containing acrylic groups on its side chains and vinyl groups at both ends used as component (A-2), 2.58 parts by weight of methylhydrogenpolysiloxane (B-1) used as component (B), and 1 part by weight of 1-ethynylcyclohexanol (D-1) and 0.5 parts by weight of bis(1,1-dimethyl-2-propynyloxy)dimethylsilane (D-2) used as components (D) were added and stirred for 10 minutes, 0.52 parts by weight of a platinum-vinylsiloxane complex was added as component (C) in such an amount as to give 13 ppm by weight of platinum atom based on the total weight of components (A), (B), and (D) and stirred for 1 minute to prepare a composition having a H/Vi (i.e., ratio of Si-H groups in the composition to alkenyl groups in the composition) of 1.6. The amount of the cyclic low-molecular-weight siloxanes contained in (A) was 8,720 ppm.

The organopolysiloxane compositions obtained in the foregoing Examples were evaluated by the following tests. The results are also shown in Tables.

### [Appearance of coating liquid]

The composition of each of Examples and Comparative Examples was stirred for 1 minute after a platinum catalyst was added to the composition. The appearance was visually observed after stirring (mixing) and after 8 hours of standing.

### [Release force]

The organopolysiloxane composition was coated on the metal roll of an offset transfer machine (IHI Machinery & Furnace Co., Ltd.), uniformly stretched by bringing metal and rubber rolls in contact and rotating the rolls for 45 seconds, and then transferred from the rubber roll to glassine paper ASP (Ahlstrom-Munksjo). The glassine paper having the organopolysiloxane composition transferred thereto was heated in a hot air dryer at 120°C for 30 seconds, completing a release paper bearing a cured film of the composition having a thickness of 0.9-1.1 g/m². After aging at 25°C for 24 hours in this state, TESA-7475 pressure-sensitive adhesive tape (Tesa UK Ltd.) was attached to the cured film surface of the release paper (side transferred from the rubber roll), which was cut into a test piece with a size of 2.5 cm by 18 cm. This test piece was sandwiched between glass plates, and aged at 25°C under a load of 70 gf/cm² and at 70°C under a load of 20 gf/cm² for 20 hours. After aging, an end portion of this test piece was detached, and the end portion of the PSA-bearing substrate of the tape was pulled back at a peeling speed of 0.3 m/min at an angle of 180° relative to the glassine paper, during which a force (N/25 mm) required for peeling was measured by a tensile tester (model AGS-50G by Shimadzu Corp.) and reported as "release force."

### [Residual adhesion rate]

The TESA-7475 adhesive tape after the measurement of release force was attached to a stainless steel plate and pressed by rolling back and forth a roller of 2 kg one cycle. The assembly was allowed to stand for 30 minutes, an end portion of the TESA-7475 adhesive tape was detached, and the end of the tape was peeled at a peeling speed of 0.3 m/min by pulling back at an angle of 180° relative to the stainless steel plate. A force (N/25 mm) required for peeling: release force "A" was measured.

As a blank, virgin TESA-7475 adhesive tape was attached to a stainless steel plate and pressed by rolling back and forth a roller of 2 kg one cycle. The assembly was allowed to stand for 30 minutes, an end portion of the TESA-7475 adhesive tape was detached, and the end of the tape was peeled at a peeling speed of 0.3 m/min by pulling back at an angle of 180° relative to the stainless steel plate. A force (N/25 mm) required for peeling: release force "B" was measured.

A residual adhesion rate (%) was determined by computing (A/B) × 100.

### [Cure]

By the same method as in the release force test, the organopolysiloxane composition was transferred from the rubber roll of the offset transfer machine to glassine paper ASP. The glassine paper having the organopolysiloxane composition transferred thereto was heated in a hot air dryer at 120°C for 30 seconds, completing a release paper bearing a cured film having a thickness of 0.9 to 1.1 g/m². Immediately after the release paper was taken out of the dryer, the cured film on its surface was intensely rubbed with the forefinger 10 cycles. With red marker ink applied to the film surface, the ink concentration and the cured film state were observed. The results are evaluated according to the following rating:
"○" when the finger mark was substantially unperceived,
"△" when the finger mark looked thin, and
"×" when the finger mark looked dense.

### [Silicone (organopolysiloxane) migration]

As in the release force test, a polyester film of 38 µm thick was laid on the surface of the cured film of the organopolysiloxane composition formed on the surface of glassine paper and press bonded at room temperature under a pressure of 0.98 MPa for 20 hours. Thereafter, the polyester film was detached from the cured film. Oily ink (tradename: Magic Ink by Teranishi Chemical Industry Co., Ltd.) was applied to the surface of the polyester film which had been in contact with the cured film, and silicone migration was evaluated in terms of ink cissing.

The results are evaluated according to the following rating:
"○" for no ink cissing, no or little silicone migration, and
"×" for ink cissing, noticeable silicone migration.

### [Amount of low-molecular-weight siloxanes contained in (A)]

The total amount of cyclic siloxanes (cyclooctamethyltetrasiloxane, cyclodecamethylpentasiloxane, and dodecamethylhexasiloxane) was determined by extracting 0.1 g of component (A) with 10 ml of acetone and performing gas chromatography. The measurement conditions were as follows: capillary column; heating conditions: 50°C to 280°C; carrier gas: helium; detector: FID; and sample injection volume: 2 µL.

**[Table 1]**

| Formulation (parts by weight) | | | Example 1 | Example 2 | Example 3 | Example 4 |
|---|---|---|---|---|---|---|
| (A) | (A-1) | methylvinylpolysiloxane (A-1-1) | 50 | 95 | | |
| | | methylvinylpolysiloxane (A-1-2) | | | 50 | 99.5 |
| | (A-2) | siloxane containing acrylic groups on side chains and vinyl groups at both ends (A-2-1) | 50 | | 50 | |
| | | siloxane containing acrylic groups on side chains and vinyl groups at both ends (A-2-2) | | 5 | | 0.5 |
| (B) | | methylhydrogenpolysiloxane (B-1) | 2.34 | 1.80 | 2.81 | 2.70 |
| (C) | | platinum-vinylsiloxane complex (C-1) | 0.52 | 0.52 | 0.52 | 0.52 |
| (D) | | 1-ethynyl-1-cyclohexanol (D-1) | 1 | 1 | 1 | 1 |
| | | bis(1,1-dimethyl-2-propynyloxy)dimethylsilane (D-2) | 0.5 | 0.5 | 0.5 | 0.5 |
| <Concentration calculated as Pt> ppm | | | 13 | 13 | 13 | 13 |
| <Amount of cyclic low-molecular-weight siloxanes in (A)> ppm | | | 700 | 740 | 710 | 40 |
| <Physical properties> | | | | | | |
| | Outer appearance of coating composition (immediately after mixing) | | colorless transparent | colorless transparent | colorless transparent | colorless transparent |
| | Outer appearance of coating composition (after 8 hours of standing) | | colorless transparent | colorless transparent | colorless transparent | colorless transparent |
| | Molar ratio of Si-H/Si-Vi | | 1.6 | 1.6 | 1.6 | 1.6 |
| <Release properties> | | | | | | |
| | Release force (N/25mm) @25°C, 70 gf/cm², 24 hr | | 0.13 | 0.08 | 0.14 | 0.12 |
| | Release force (N/25mm) @70°C, 20 gf/cm², 24 hr | | 0.25 | 0.18 | 0.27 | 0.24 |
| | Residual adhesion rate (%) @25°C, 70 gf/cm², 24 hr | | 92 | 98 | 91 | 98 |
| | Residual adhesion rate (%) @70°C, 20 gf/cm², 24 hr | | 92 | 97 | 90 | 99 |
| | Cure | | ○ | ○ | ○ | ○ |
| | Silicone migration | | ○ | ○ | ○ | ○ |

**[Table 2]**

| Formulation (parts by weight) | | | Comp. Example 1 | Comp. Example 2 | Comp. Example 3 | Comp. Example 4 |
|---|---|---|---|---|---|---|
| (A) | (A-1) | methylvinylpolysiloxane (A-1-1) | 100 | | | |
| | | methylvinylpolysiloxane (A-1-2) | | 100 | | |
| | (A-2) | siloxane containing acrylic groups on side chains and vinyl groups at both ends (A-2-1) | | | 100 | |
| | | siloxane containing acrylic groups on side chains and vinyl groups at both ends (A-2-2) | | | | 100 |
| (B) | | methylhydrogenpolysiloxane (B-1) | 1.77 | 2.70 | 2.90 | 2.49 |
| (C) | | platinum-vinylsiloxane complex (C-1) | 0.52 | 0.52 | 0.52 | 0.52 |
| (D) | | 1-ethynyl-1-cyclohexanol (D-1) | 1 | 1 | 1 | 1 |
| | | bis(1,1-dimethyl-2-propynyloxy)dimethylsilane (D-2) | 0.5 | 0.5 | 0.5 | 0.5 |
| <Concentration calculated as Pt> ppm | | | 13 | 13 | 13 | 13 |
| <Amount of cyclic low-molecular-weight siloxanes in (A)> ppm | | | 20 | 30 | 1,390 | 14,510 |
| <Physical properties> | | | | | | |
| | Outer appearance of coating composition (immediately after mixing) | | colorless transparent | colorless transparent | colorless transparent | colorless transparent |
| | Outer appearance of coating composition (after 8 hours of standing) | | colorless transparent | colorless transparent | colorless transparent | colorless transparent |
| | Molar ratio of Si-H/Si-Vi | | 1.6 | 1.6 | 1.6 | 1.6 |
| <Release properties> | | | | | | |
| | Release force (N/25mm) @25°C, 70 gf/cm², 24 hr | | 0.28 | 0.25 | 0.18 | 0.18 |
| | Release force (N/25mm) @70°C, 20 gf/cm², 24 hr | | 0.59 | 0.43 | 0.36 | 0.38 |
| | Residual adhesion rate (%) @25°C, 70 gf/cm², 24 hr | | 76 | 79 | 85 | 83 |
| | Residual adhesion rate (%) @70°C, 20 gf/cm², 24 hr | | 75 | 77 | 82 | 80 |
| | Cure | | × | × | × | × |
| | Silicone migration | | × | × | × | × |

**[Table 3]**

| Formulation (parts by weight) | | | Comparative Example 5 | Comparative Example 6 | Comparative Example 7 |
|---|---|---|---|---|---|
| (A) | (A-1) | methylvinylpolysiloxane (A-1-1) | | 20 | |
| | | methylvinylpolysiloxane (A-1-2) | | | 40 |
| | (A-2) | siloxane containing acrylic groups on side chains and vinyl groups at both ends (A-2-1) | | 80 | |
| | | siloxane containing acrylic groups on side chains and vinyl groups at both ends (A-2-2) | | | 60 |
| | | siloxane containing acrylic groups on side chains and vinyl groups at both ends (A-2-3) | 100 | | |
| (B) | | methylhydrogenpolysiloxane (B-1) | 1.84 | 2.68 | 2.50 |
| (C) | | platinum-vinylsiloxane complex (C-1) | 0.52 | 0.52 | 0.52 |
| (D) | | 1-ethynyl-1-cyclohexanol (D-1) | 1 | 1 | 1 |
| | | bis(1,1-dimethyl-2-propynyloxy)dimethylsilane (D-2) | 0.5 | 0.5 | 0.5 |
| <Content of metals other than Pt in composition> ppm | | | 13 | 13 | 13 |
| <Amount of cyclic low-molecular-weight siloxanes in (A)> ppm | | | 12,480 | 1,120 | 8,720 |
| <Physical properties> | | | | | |
| | Outer appearance of coating composition (immediately after mixing) | | colorless transparent | white slightly turbid | white slightly turbid |
| | Outer appearance of coating composition (after 8 hours of standing) | | colorless transparent | white slightly turbid | white slightly turbid |
| | Molar ratio of Si-H/Si-Vi | | 1.6 | 1.6 | 1.6 |
| <Release properties> | | | | | |
| | Release force (N/25mm) @25°C, 70 gf/cm², 24 hr | | 0.16 | 0.16 | 0.17 |
| | Release force (N/25mm) @70°C, 20 gf/cm², 24 hr | | 0.31 | 0.30 | 0.31 |
| | Residual adhesion rate (%) @25°C, 70 gf/cm², 24 hr | | 88 | 88 | 84 |
| | Residual adhesion rate (%) @70°C, 20 gf/cm², 24 hr | | 87 | 86 | 84 |
| | Cure | | Δ | Δ | Δ |
| | Silicone migration | | × | × | × |

## Claims

1. An addition reaction curable organopolysiloxane composition comprising the following components (A), (B), and (C):
(A) components (A-1) and (A-2)
(A-1) 50 to 99.9 parts by weight of an organopolysiloxane having on the average at least two silicon-bonded alkenyl groups per molecule and no (meth)acrylic group, and
(A-2) 50 to 0.1 parts by weight of an organopolysiloxane having on the average 0.1 or more alkenyl groups and on the average 0.1 to 20 (meth)acrylic groups per molecule (the total amount of (A-1) and (A-2) is 100 parts by weight),
(B) an organohydrogenpolysiloxane having on the average at least two silicon-bonded hydrogen atoms (or Si-H groups) per molecule, and
(C) a platinum group metal-based catalyst in an amount to give 1 to 200 ppm of platinum group metal based on the total weight of the composition.

2. The addition reaction curable organopolysiloxane composition of claim 1, wherein the total content of cyclooctamethyltetrasiloxane, cyclodecamethylpentasiloxane, and dodecamethylhexasiloxane is 1,000 ppm (by weight) or less in component (A).

3. The addition reaction curable organopolysiloxane composition of claim 1, further comprising an addition reaction control agent as component (D).

4. The addition reaction curable organopolysiloxane composition of claim 3, wherein component (D) contains a mixture of an acetylene group-containing compound having a hydroxy group and a silane having an acetylene group.

5. The addition reaction curable organopolysiloxane composition of any one of claims 1 to 4, for use in release paper or release film.

6. A method for producing the addition reaction curable organopolysiloxane composition of claim 1, comprising a step of mixing components (A-1), (A-2), and (B) above.

7. A method for producing the addition reaction curable organopolysiloxane composition of claim 3, comprising a step of mixing and dispersing component (D) in components (A-1) and (A-2) or component (B) in advance.

8. The production method of claim 6 or 7, comprising a step of synthesizing component (A-1) by using an alkali catalyst and a step of synthesizing component (A-2) by using an acid catalyst.
